(19)

**Europäisches Patentamt**

**European Patent Office**

**Office européen des brevets**

(11) **EP 3 798 723 B1**

(12) **EUROPEAN PATENT SPECIFICATION**

(45) Date of publication and mention
of the grant of the patent:
**10.12.2025 Bulletin 2025/50**

(21) Application number: **20192311.7**

(22) Date of filing: **24.08.2020**

(51) International Patent Classification (IPC):
***G02F 1/35*** *(2006.01)* ***G02F 1/39*** *(2006.01)*

(52) Cooperative Patent Classification (CPC):
**G02F 1/392; G02F 1/3501; G02F 1/3544;**
G02F 2201/16; G02F 2202/40

(54) **MULTISTAGE PARAMETRIC LIGHT AMPLIFICATION METHOD AND MULTISTAGE AMPLIFIER**

MEHRSTUFIGES PARAMETRISCHES LICHTVERSTÄRKUNGSVERFAHREN UND
MEHRSTUFIGER VERSTÄRKER

PROCÉDÉ D'AMPLIFICATION DE LUMIÈRE PARAMÉTRIQUE À PLUSIEURS ÉTAGES ET
AMPLIFICATEUR À PLUSIEURS ÉTAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2019 LT 2019523**

(43) Date of publication of application:
**31.03.2021 Bulletin 2021/13**

(73) Proprietor: **Vilnius University**
**01513 Vilnius (LT)**

(72) Inventor: **BUDRIUNAS, Rimantas**
**LT-10223 Vilnius (LT)**

(74) Representative: **Petniunaite, Jurga**
**AAA Law**
**A. Gostauto 40B**
**03163 Vilnius (LT)**

(56) References cited:
**EP-A1- 2 899 816**     **EP-A2- 2 346 122**
**US-A1- 2016 026 066**     **US-B1- 6 208 458**

- **YING LI ET AL: "Versatile backconversion-inhibited broadband optical parametric amplification based on an idler-separated QPM configuration", OPTICS LETTERS, vol. 42, no. 14, 15 July 2017 (2017-07-15), US, pages 2806, XP055545187, ISSN: 0146-9592, DOI: 10.1364/OL.42.002806**
- **JINGUI MAJING WANGBINGJIE ZHOUPENG YUANGUOQIANG XIEKAINAN XIONGYANQING ZHENGHEYUAN ZHULIEJIA QIAN: "Broadband, efficient, and robust quasi-parametric chirped-pulse amplification", OPTICS EXPRESS, vol. 25, no. 21, 2017, pages 25149 - 25164, XP002802043**

## Description

Technical Field

The invention relates to a parametric light amplification method and an amplifier and in particular to a multistage parametric light amplification and a multistage amplifier with nonlinear crystals.

Background of the invention

Parametric light amplifiers are most widely used in fundamental research when light pulses are required with parameters that cannot be directly achieved using laser sources. Improving efficiency of parametric amplifiers may be particularly relevant in cases where an experiment requires multi-level frequency conversion schemes (parametric amplifier pumped by radiation from another parametric amplifier). It is also relevant for obtaining extremely high power of a parametric wave (with better amplification efficiency, required power of the parametric wave can be achieved with a pump laser of a lower power).

Parametric light amplification is widely studied in scientific literature. Much attention has been paid to bandwidth and tuning properties of parametric amplifiers, but in absolute majority of setups discussed in the literature energy efficiency of parametric amplifiers (fraction of energy transferred from pump wave to signal wave) reaches 10-30%. Individual cases have been described in which the efficiency slightly exceeds these values, but this is usually achieved by using hyper-Gaussian (flat-top) laser beams, which are quite rare and difficult to apply in laser technique due to poorer propagation and focusing properties, compared to Gaussian beams. Back-conversion is the main factor limiting energy conversion efficiency in parametric amplifiers pumped by short and sufficiently intense pulses. During parametric amplification, an idler wave is generated along with the signal wave amplification (each photon converted from the pump wave is split into one photon of the signal wave and one photon of the idler wave). In practice in almost all cases the pump and the signal waves are characterized by spatial and temporal intensity modulation, that is, higher and lower intensity areas. Since the rate of conversion of the pump wave photons into the signal and the idler wave photons depends on local accumulation and signal wave intensity, the process is different at different speeds in different spatial/temporal areas of the pump wave. As the pump and signal waves propagate through the crystal the process occurs most rapidly in the areas where the initial pump wave intensity was highest (the waves travel shortest distance in the crystal) and is delayed in other areas (not all pump photons converted yet in lower intensity areas while all photons converted in higher intensity areas). In fully depleted areas of the pump beam the signal and the idler waves begin to add up again to a new pump wave, while in other parts of the pulse beam the pump wave is still depleted and incompletely converted into the signal and the idler waves. Thus, in standard parametric amplification setups, utilizing spatiotemporally Gaussian-shaped pulsed beams, it is not possible to achieve that all the energy of the pump wave is converted to the signal and the idler waves: if the process is stopped (by selecting thickness of the nonlinear crystal and the wave intensities), when the most intense beam/ pulse areas are converted, the pump energy in the lower intensity areas has not yet been transferred to the signal; if the process is continued (e.g. by selecting a longer crystal) to convert areas of lower intensity, in areas that have already been exchanged (where all the energy of the pump wave has already been consumed), the signal and the idler waves start generating a sum frequency - returning energy to the pump wave, and the total signal wave energy essentially stops increasing.

Prior art scientific publication Ying Li, Haizhe Zhong, Jianlong Yang, Shiwei Wang, and Dianyuan Fan, "Versatile backconversion-inhibited broadband optical parametric amplification based on an idler-separated QPM configuration", Optics Letters Vol. 42, Issue 14, pp. 2806-2809 (2017*), analyzes a way to increase efficiency of parametric amplifiers by creating such conditions that reverse conversion cannot take place. The method comprises use of an amplifying crystal with a periodically oriented crystal structure. Said periodically oriented structure is rotated at a large angle in the direction of propagation of a signal and pump waves. In this way, the idler wave propagates in a different direction than the pump and the signal waves. Said crystals are arranged sequentially with sufficiently large gaps between them. In this way, it is achieved that the idler wave generated in one crystal does not reach the other crystal. The main disadvantage of this method is the need to use crystals with periodically poling: said crystals have a very limited aperture, typically about 1-2 mm, so this technology is not suitable for use with high-energy laser pulses.

Another scientific publication Wenqi Li, Chun Peng, Lu Xu, Lianghong Yu, and Xiaoyan Liang, "Optimizing the performance of non-collinear optical parametric chirped pulse amplification via multi-pass structure based on two geometry configurations" analyzes a multipass parametric amplifier, a setup reminiscent regenerative amplifiers used in lasers. Due to use of non-collinear parametric interaction, the idler wave is emitted from a resonator during each resonator pass and does not participate in further interactions. The main disadvantage of this amplifier is a very complex design and the required nanosecond durations of the interacting pulses. In addition, there are losses and beam transformations due to propagation in the resonator, and effects due to nonlinear refractive index, which are not considered in the paper. In addition, the spectral band of the Pockels elements and wave plates used in the schematic is limited. It is worth noting that the work presents only results of theoretical modeling.

In scientific publication by Jingui Ma, Jing Wang, Peng Yuan, Guoqiang Xie, Kainan Xiong, Yifan Tu, Xiaoniu Tu, Erwei Shi, Yanqing Zheng, and Liejia Qian, "Quasi-parametric amplification of chirped pulses based on a Sm3+-doped yttrium calcium oxyborate crystal", Optica Vol. 2, Issue 11, pp. 1006-1009 (2015) and by Jingui Ma, Jing Wang, Bingjie Zhou, Peng Yuan, Guoqiang Xie, Kainan Xiong, Yanqing Zheng, Heyuan Zhu, and Liejia Qian, "Broadband, efficient, and robust quasi-parametric chirped-pulse amplification", Optics Express Vol. 25, Issue 21, pp. 25149-25164 (2017) it is demonstrated that by doping a parametric amplification crystal with a material that causes idler wave absorption, significantly higher efficiencies can be achieved than in a standard parametric amplifier. However, strong crystal heating can be expected in such an amplifier, which is highly undesirable in high average power laser systems because it destabilizes operation of the systems.

US patent application No.: 14/340,688 (publication No.: US2016/0026066A1) discloses an optical parametric amplifier and methods for idler extraction therein. Certain examples provide a method of extracting the idler at intermediate points within the optical parametric amplifier chain to improve conversion efficiency and/or maintain high beam quality (high Strehl ratio), where the pump beam has non-uniform profile. The idler extractors can include polarizers, beam displacer crystals, or dichroic mirrors, for example. D1 is largely concerned with either separating the idler wave in space, by employing birefringent walk-off crystals to change the propagation trajectory of the idler wave, or by using an absorbing medium to prevent the idler wave from further interaction by converting the idler wave into heat. The document does not disclose separation of the idler wave in time.

European patent application No. EP11150701.8 (publication No.: EP2346122A2) discloses an optical amplifier, amplifying signal light and including a pump light source that outputs pump light of a wavelength different from that of the signal light; a combining unit that combines the signal light and the pump light output by the pump light source, to output combined light; an amplifying unit that has non-linear optical media that transmit the combined light to amplify the signal light, the amplifying unit further removing, in the non-linear optical media, idler light generated from the signal light and the pump light, and outputting light that results; and an extraction filter that extracts the signal light from the light output by the amplifying unit. Although the document discloses means of elimination of the idler wave either by selection of wavelength filtering or polarization, the document does not disclose separation of the idler wave in time which can be applied to prevent the idler wave generated in the first amplification means from further interaction with signal and pump waves in subsequent amplification means.

European patent application No.: EP14466004.0 (publication No.: EP2899816A1) discloses The method and device for the time synchronization of picosecond and sub-picosecond laser pulses by means of a feedback loop based on measurement of the relative delay of the pulses of the signal and pump laser beam, using their interaction in a nonlinear medium, where the partial laser beams intended for synchronization control are uncoupled (1a/1b) from the primary laser beams immediately before entering the interaction which is sensitive to pulse synchronization. The "modification means" in the patent application are disclosed as mostly used before parametric amplification stage(s) in order to prepare the pulses to be measured in the required way. Disclosure does not rely on using "modification means" between nonlinear amplification stages.

This invention does not have the above-mentioned disadvantages associated with increasing the efficiency of parametric light amplification, and includes additional advantages.

Summary of the invention

The invention discloses combination of at least one parametric amplification means, such as a nonlinear crystal with at least one parametric amplification area, with means for modifying the pump, signal and idler wave parameters. Purpose of such combination is to remove the idler wave generated in the amplifier and/or to modify the three-wave interaction conditions so that the idler wave could not continue to participate in the nonlinear interaction. Because back-conversion occurs only when the signal and idler waves begin to add up, removing the idler wave ensures that back-conversion no longer occurs and the energy exchange between the accumulation and the signal and idler waves will only take place in one direction - in favor of the signal wave, and the photons exchanged into signal wave will not return to the pump wave. In this way, by ensuring the unidirectionality of energy exchange, it is possible to increase the share of pump energy transferred to the signal wave. Besides increasing optical parametric amplifier efficiency, the disclosed methods have an advantageous side effect of reducing the sensitivity of optical parametric amplifiers to changes of input pulse energy. This can be exploited to use the parametric amplifier without readjustments with different pump energies (up to a factor of several times), and maintaining a nearly-constant conversion efficiency and reasonable output beam quality within the range of input beam parameters.

Short Description of Drawings

Other features and advantages of the invention are described in the detailed description of the invention with reference to the following drawings:

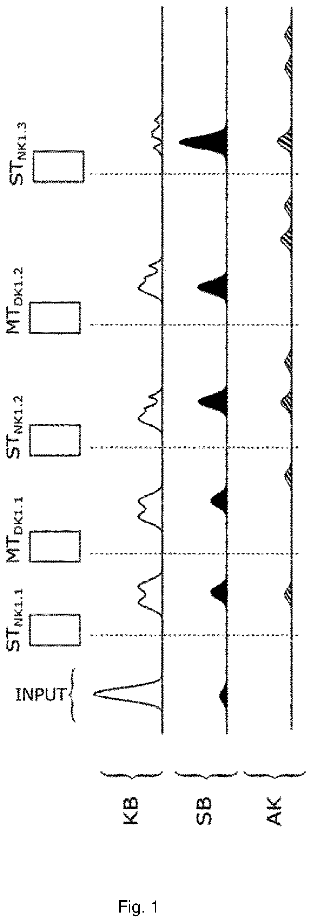

Fig. 1 shows schematic diagram of first embodiment of parametric amplification according to the invention using several amplification means, such as nonlinear crystals between which modification means are inserted. The modification means are such as birefringent crystals, in which the idler wave is delayed with respect to the pump and the signal waves.

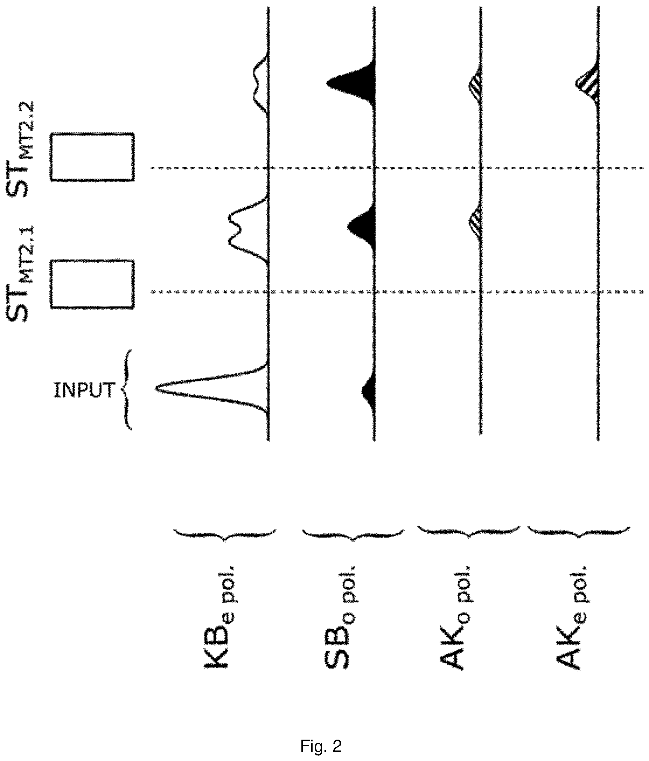

Fig. 2 shows schematic diagram of second embodiment of parametric amplification according to the invention, wherein the amplification means are nonlinear crystals, each nonlinear crystal having a different orientation and parameters so that different nonlinear interactions occur in each nonlinear crystal after the first nonlinear crystal.

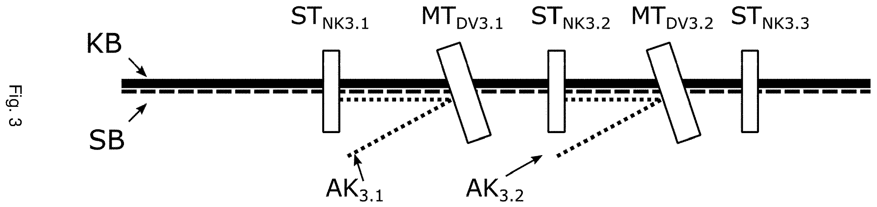

Fig. 3 shows schematic diagram of third embodiment of parametric amplification according to the invention, wherein the amplification means are nonlinear crystals, between which a differential wave is removed by modification means - dichroic mirrors.

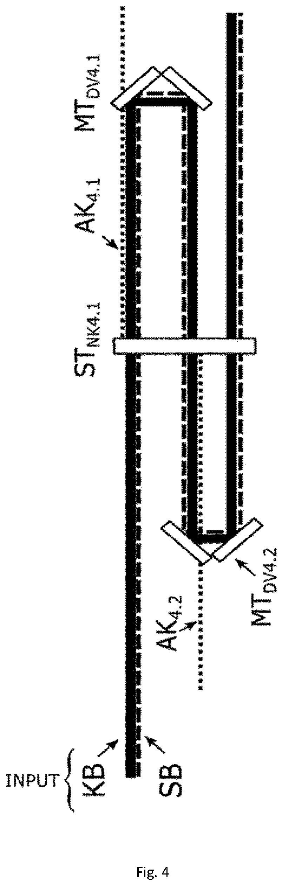

Fig. 4 shows schematic diagram of fourth embodiment of parametric amplification according to the invention, wherein the idler wave is removed using a modifier made of pairs of dichroic mirrors, and the pump and signal waves are sent several times to the same amplifier which is a nonlinear crystal.

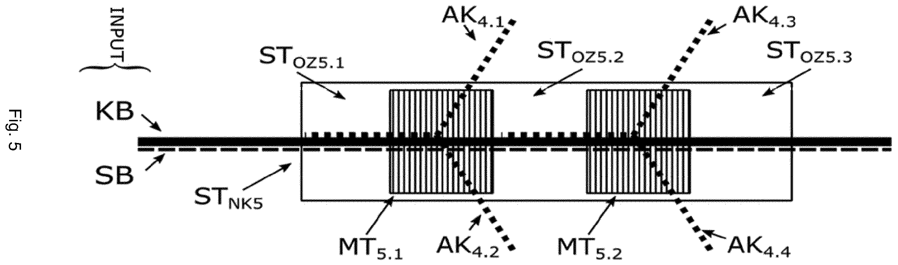

Fig. 5 shows schematic diagram of fifth embodiment of parametric amplification according to the invention, wherein at least two areas of different optical properties are formed in one amplification means, which is the nonlinear crystal: the area or areas with first set of properties perform the function of the amplification area or areas; the area or areas with the second set of properties perform function of a modifier that prevents the idler wave, generated in one parametric amplification area, from entering into the other, parametric amplification, area.

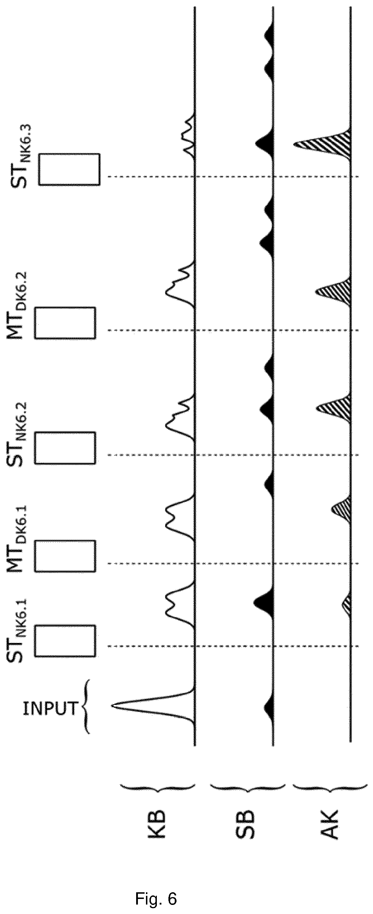

Fig. 6 shows schematic diagram of the sixth embodiment of parametric amplification according to the invention using several amplification means, such as nonlinear crystals, including modification means, such as birefringent crystals, in which the delay between pump, signal and idler waves is arranged so that the idler wave generated in the first amplification medium would be amplified as a signal wave in the remaining amplification medium, and the signal waves would be delayed relative to the other waves.

Detailed description of embodiments of the invention

It should be understood that numerous specific details are set out in order to provide a complete and comprehensive description of the embodiment example of the invention. However, the skilled person will understand that the level of details of embodiment examples does not limit the embodiment of the invention, which can be embodied without such specific instructions. Well-known methods, procedures and components have not been described in detail to make sure that embodiment examples are not misleading. Furthermore, this description should not be construed as limiting exemplary embodiments provided, but merely as an implementation thereof.

Although exemplary embodiments of the invention or aspects thereof, as illustrated and described, include many components that are depicted in a particular common space or location, some components may also be remote. It should also be understood that the examples given are not limited to the components described but also include other elements required for their functioning and interaction with other components, the existence of which is self-explanatory and therefore not detailed.

Parametric light amplification according to the invention comprises passing an incoming pump wave and a signal wave through one or more amplification areas of one or more nonlinear crystals and modifying the parameters of the pump wave, the signal wave and the idler wave leaving such modification area.

In all embodiments of the invention, optical parametric amplification occurs in amplification area of each nonlinear crystal. In this process, during which the energy of the pump wave is transferred to the signal wave, the idler wave is generated simultaneously.

In all embodiments of the invention, each modification means separates the idler wave from the pump and the signal waves, for example, by changing direction of propagation of the idler wave. Each of the modification means also modifies the idler wave, pump wave, and/or the signal-wave parameters so that in the next amplification area into which the pump and signal waves enter, after interaction with the modification means, only the pump wave and the signal wave interact, and the idler waves from previous amplification area or areas would no longer participate in further interactions.

In all embodiments of the invention, selection of a nonlinear crystal type is essentially the same as a crystal selection procedure used in standard parametric amplifiers: the crystal must be transparent for pump wavelength, signal wavelength and idler wavelengths with sufficient $\chi^{(2)}$ (second order) optical nonlinearity, and must ensure conditions of phase matching for efficient interaction of the pump wave and the signal wave. Nonlinear crystals may include, but are not limited to: $BaB_2O_4$, $LiB_3O_5$, $KTiOAsO_4$, $KTiOPO_4$, $LiNbO_3$, GaSe crystals.

In one embodiment of the invention, and as shown in Figure 1, the first amplification means ($ST_{NK1.1.}$) is a nonlinear crystal, and the modification means ($MT_{DK1.1.}$) arranged behind it is a birefringent crystal. In such schematic diagram more than one nonlinear crystal ($ST_{NK1.1.}$, $ST_{NK1.2.}$, $ST_{NK1.3.}$) with at least one birefringent crystal ($MT_{DK1.1.}$,

$MT_{DK1.2}$) behind it or in between them may be arranged. The signal wave (SB) and the pump wave (KB) of the parametric amplifier are combined into the nonlinear crystal, where the signal wave is amplified until certain part of the pump energy is converted into the signal wave (5-10%), but without reaching back-conversion.

In the vast majority of parametric amplification schemes used in practice, polarization of the pump wave is perpendicular to the polarizations of the signal and/or idler waves. If polarization of the pump wave coincides with polarization of the idler wave but differs from polarization of the signal wave the parameters of the birefringent crystal (material, thickness and cut-off angle) can be selected such, that after placing it behind the nonlinear crystal, the signal wave would be under the non-depleted portion of the pump pulse and the idler wave pulse would be shifted in time so as to not overlap with either the signal or the pump pulse as shown in Figure 1. Orientation and/or cut-off angles of the birefringent crystals must be chosen so as not to satisfy the phase-matching conditions for parametric amplification or other nonlinear interactions between amplified waves, and the pulse of the idler wave would be separated from the signal pulse in time due to chromatic dispersion, and the pump pulse would not be separated from the signal pulse due to double refraction. After sorting the pulses and arranging the amplification means ($ST_{NK1.1.}$, $ST_{NK1.2.}$, $ST_{NK1.3.}$) and modification means ($MT_{DK1.1.}$, $MT_{DK1.2.}$) as shown in Figure 1, the parametric amplification continues in the second nonlinear crystal ($ST_{DK1.2.}$). The idler wave (AK) generated in the first nonlinear crystal ($ST_{DK1.1.}$) no longer participates in the process because it is separated from other pulses in time. Although Figure 1 shows a solution with three amplification mediums ($ST_{NK1.1}$, $ST_{NK1.2}$, $ST_{NK1.3}$) and two modification mediums ($MT_{DK1.1.}$, $MT_{DK1.2.}$), the described steps can be repeated more or less times - until the desired portion of the KB energy is exchanged to SB or the amplification saturation is reached.

The birefringent crystal ($MT_{DK1.1.}$, $MT_{DK1.2.}$) can be made of, but not limited to, materials used in the visible-near-infrared range, such as $\alpha$-$BaB_2O_4$, calcite, $YVO_4$.

The birefringent crystal ($MT_{DK1.1.}$, $MT_{DK1.2.}$) performs a dual function: it shifts the idler wave (AK) pulse from the signal (SB) and from the pump (KB) pulses and shifts the signal pulse onto still unconverted part of the pump pulse. Group delays caused by the chromatic dispersion of the birefringent crystal and the birefringence for the pump, signal and idler wave pulses are denoted by $t_K$, $t_S$ and $t_{\check{S}}$, and duration of the pump pulse is denoted by $\tau$. Then conditions 2) and 3) can be mathematically written as follows:

$$|t_S - t_{\check{S}}| = K\tau \qquad\qquad [1]$$

$$t_S = t_K \qquad\qquad [2]$$

wherein $K$ is a constant, the choice of which is determined by a balance between two factors: the need to distinguish the idler wave pulse from the other pulses as best as possible and the need to have as thin a refractory crystal as possible to minimize the occurrence of undesirable nonlinear side effects (mostly Kerr effect, which results in self-phase modulation of pulses and nonlinear self-focusing of beams). If the duration of the pump pulse $\tau$ is defined in the pulse at half the height of intensity and the pulse shape is close to the Gaussian pulse, the value of the constant $K$ should be about 3-4 for the pulses to be well separated from each other.

Considering that the light pulse delay t in a transparent medium depends on the medium thickness $z$ and the group refractive index $n_g$, which in turn is a function of the light pulse wavelength $\lambda$ and the crystal cut angle $\theta$, and also depends on polarization ($o$ or $e$), the equation [2], according to which the crystal cutting angle $\theta$ is to be selected, can be reformulated as follows:

$$n_g(\lambda_S, P_S \cdot \theta) = n_g(\lambda_K, P_K \cdot \theta) \qquad\qquad [3]$$

wherein $P_i$ is the polarization factor of the corresponding wave ($S$ - signal, $K$ - pump, $\check{S}$ - idler) with index $i$, equal to 0 if the corresponding wave is polarized in the o plane (simple wave), or equal to 1 if the corresponding wave is polarized in the e plane. In the general case, the dependence of the crystal refractive index on the wavelength and the dependence of the cut-off angle are described by nonlinear formulas, so it is most convenient to find the angle $\theta$ by numerical mathematical methods.

When the required crystal cut angle $\theta$ is known, the crystal thickness z required for the idler wave to be sufficiently separated in time can be expressed from equation (1) as follows:

$$z = \frac{K\tau}{\left| n_g(\lambda_S, P_S \cdot \theta) - n_g(\lambda_{\check{S}}, P_{\check{S}} \cdot \theta) \right|} \qquad\qquad [4]$$

As an example, in order to realize the invention with the above-mentioned combination of wavelengths 515nm -> 710nm + 1875nm, the β-BaB$_2$O$_4$ crystal cut at an angle $\theta$ = 28.85 could be used as a birefringent crystal in the present method of the embodiment. If the pump pulse duration is ~ 250fs, the crystal thickness required to separate the idler wave from the pump pulse during the 3 pump pulse durations ($K$ = 3) would be approximately 4.7mm (if amplification crystals use type II interactions and the idler wave polarization coincides with that of the pump wave). By rotating such a birefringent crystal in the range of several degrees, the delay between the pump and the signal pulses could be adjusted so that in each nonlinear crystal the signal pulse interacts with a new portion of the pump pulse, thus gaining as much energy as possible.

Since reflections from the surface of modification means, such as a birefringent crystal (MT$_{DK1.1.}$, MT$_{DK1.2,}$ MT$_{DK2.1.}$), cause losses to the optical system, the birefringent crystals (MT$_{DK1.1.}$, MT$_{DK1.2,}$ MT$_{DK2.1.}$) would typically be covered with anti-reflective coatings. For example, with widely commercially available antireflective coatings (1% loss on one surface), a system of 7 elements (4 nonlinear crystals and 3 birefringent crystals) would result in a loss of ~14% of total radiation due to reflections, and a system of 11 elements - even 20%. Therefore, it is rational to select thicknesses of nonlinear crystals in such a system so that the saturation is reached through 3-4 nonlinear crystals.

All crystals can make a formation of a continuous line as an amplification stage.

In yet another embodiment of the invention, and as shown in Figure 2, two nonlinear crystals (ST$_{MT2.1.}$, ST$_{MT2.2.}$) positioned one behind the other are used for parametric amplification. The idler wave (AK$_{opol}$, AK$_{epol}$) generated in one crystal would be of o (or e) polarization and the other would be of e (or respectively o) polarization. Thus, the idler wave generated in the first crystal (ST$_{MT2.1.}$) cannot participate in the interaction in the second crystal (ST$_{MT2.2.}$). Such nonlinear crystals perform the amplification and modification function.

Such nonlinear crystals (ST$_{MT2.1.}$, ST$_{MT2.2.}$) are selected to have different (0, I or II) types of three-wave nonlinear interactions with appropriate pump and signal wave polarizations (in both crystals (ST$_{MT2.1.}$, ST$_{MT2.2.}$), the signal and the pump wave polarizations must be the same and the differential wave polarizations must be different). For example, using ~512-532nm radiation for pump (the second harmonic of the widespread ytterbium or neodymium ion doped lasers) can effectively amplify signal pulses in the 650-2300nm range using technologically mature β-BaB$_2$O$_4$ crystals. For example, at a pump wavelength of 515 nm and a signal wavelength of 710 nm, the method can be implemented in crystals of the following parameters:

1 crystal (ST$_{MT2.1.}$): type I interaction 515nm -> 710nm + 1875nm (e-oo); crystal cut-off angles $\theta$=21.9° $\varphi$=90°
2 crystal (ST$_{MT2.2.}$): type I interaction 515nm -> 710nm + 1875nm (e-oe); crystal cut-off angles $\theta$=25.8° $\varphi$=0°

Since the application of the present embodiment of the invention does not require separation of the idler wave pulse in time, this embodiment can be applied not only with femtosecond, but also with picosecond and nanosecond laser pulses. Using a laser generating pulses of ~ 250fs duration and the above described combination of crystals (for type I crystal (ST$_{MT2.1.}$) the thickness was 2mm, for type II crystal (ST$_{MT2.1.}$) the thickness was 2.5mm) and after selecting the above interacting wavelengths, energy efficiency of >40% was achieved in the laboratory and the quality parameter M$^2$ of the amplified beam did not exceed 1.8.

All crystals can make a formation of a continuous line as an amplification stage.

In yet another embodiment of the invention, and as shown in Figure 3, the idler wave (AK$_{3.1.}$, AK$_{3.2.}$) generated in the nonlinear crystals (ST$_{NK3.1.}$, ST$_{NK3.2.}$, ST$_{NK3.3.}$) is separated from the pump wave (KB) and the signal wave (SB) with the single dichroic mirrors (MT$_{DV3.1.}$, MT$_{DV3.2.}$). In yet another embodiment of the invention, and as shown in Figure 4, a single nonlinear crystal (ST$_{NK4.1.}$) is used as an amplification means in the amplifier, through which a signal wave (SB) and an pump wave (KB) are passed more than once. In a nonlinear crystal (ST$_{NK4.1.}$), after each passing of signal wave (SB) and (KB), the generated idler wave (AK$_{4.1.}$, AK$_{4.2.}$) is separated from the pump wave (KB) and signal wave (SB) by dichroic mirrors or pairs of dichroic mirrors (MT$_{DV3.1.}$, MT$_{DV3.2.}$) that modify the propagation path of the signal wave (SB) and the pump wave (KB) in such a way that said waves pass through said nonlinear crystal more than once. This option can be combined with the method shown in Figure 2 and / or the method shown in Figure 1, for example in a multipath schematic diagram as in Figure 4, using a pair of crystals instead of one nonlinear crystal as in Figure 2 with type I parametric interaction in one crystal and type II interaction in another crystal. In this embodiment of the invention, instead of using a different nonlinear crystal after each idler wave separation, after the idler wave is separated, the pump and signal waves can be sent to the same nonlinear crystal. On the other hand, if it were more convenient for technological reasons, in the schematic diagram shown in Figure 4, reflections KB and SB from MT$_{DV4.1}$ could be directed into a different nonlinear crystal each time instead of combining them into the same amplifier ST$_{NK4.1}$.

As in the embodiments of the invention shown in Figures 1 and 2, the embodiments of the invention shown in Figures 3 and 4 are not limited to specific nonlinear crystals: in the nonlinear crystals used, the selected wavelengths must have efficient three-wave interactions, i.e. the same crystals as would be used in the conventional parametric amplification schematic diagrams. For best efficiency it would be reasonable to select such type of interaction that would make minimal losses of signal and pump waves from dichroic mirrors. For example, if dichroic mirrors reflecting a idler wave (as shown in Figure 3) are used, it is likely to be best to choose such interaction in which polarizations of the pump and signal waves coincide and to use dichroic mirrors operating at an angle close to the Brewster angle oriented so that the polarizations of pump and signal waves are in the p-plane. If dichroic mirrors are used that reflect the signal and the pump waves but do not reflect the idler waves, then the dichroic mirror will need to be oriented so that the polarizations of the signal and the pump waves are in the s-plane. This method of implementation also does not require separation of pulses in time, making it suitable for use with laser pulses of substantially any duration, except for a very short (approximately <100fs) pulses in such schematic diagram where the dichroic mirrors are transparent for signal and pump pulses. In such case, dispersion of the dichroic mirror can separate the signal pulse from the pump pulse in time, and the interaction will no longer occur. This problem can be avoided by using dichroic mirrors that reflect the signal and the pump waves while are transparent for the idler wave. An example of the embodiment using such dichroic mirrors is shown in Figure 4.

In case of another embodiment of the invention, and as shown in Figure 5, the first amplification means is an optical area ($ST_{OZ5.1.}$) present in the nonlinear crystal ($ST_{NK5}$) having more than one optical area with different properties ($ST_{OZ5.1.}$, $ST_{OZ5.2.}$, $ST_{OZ5.3.}$, $MT_{5.1.}$, $MT_{5.2.}$) and the first modification means ($MT_{5.1.}$) behind the first amplification means ($ST_{OZ5.1.}$) is the optical area in the same nonlinear crystal ($ST_{NK5}$) whose optical properties differ from the optical area ($ST_{OZ5.1.}$)of the first amplification means. Such crystal ($ST_{NK5}$) may contain more than one amplification means ($ST_{OZ5.1.}$, $ST_{OZ5.2.}$ $ST_{OZ5.3.}$) and more than one modification means ($MT_{5.1.}$, $MT_{5.2.}$) arranged one after the other, as shown in Figure 5.

As in other embodiments of the invention, purpose of the modifying means ($MT_{5.1.}$, $MT_{5.2.}$) here is to separate the idler wave generated in one amplification medium (for example, but not limited to, making conditions in modification medium for idler wave diffraction and / or scattering into multiple waves (AK4.1, AK4.2, AK4.3, AK4.4) from the pump wave (KB) and the signal wave (SB) so that the idler wave (AK4.1, AK4.2, AK4.3, AK4.4) can no longer participate in the interaction, when the pump wave (KB) and the signal wave (SB) enter the further amplification medium. Without limiting, modification means ($MT_{5.1.}$, $MT_{5.2.}$) implemented as areas in a nonlinear crystal having different optical properties compared to the optical properties of the amplification areas, are formed between the amplification areas with periodic or aperiodic refractive index modulations, such as: Bragg grating or photonic crystal structure capable of scattering the idler wave (photonic crystal principle) or reflecting it (Bragg grating principle). LiNbO3 is one of the crystals for which advanced methods of recording refractive index modifications have been developed that could be used to form zones of optical properties suitable for embodiments of the invention.

In another embodiment of the invention, as shown in Figure 6, the idler wave (AK) generated in the first (or subsequent) amplification means ($ST_{NK6.1}$) may be used as a signal wave in subsequent amplification means ($ST_{NK6.2}$, $ST_{NK6.3}$), and the properties of the modification medium ($MT_{DK6.1}$, $MT_{DK6.2}$) are chosen so as to remove from interaction in the further amplification medium the wave that was signal at the input of the amplifier. Importantly, any of the types of modification means described above can be used to perform this function. For example, this could be done by using the same schematic diagram as in Figure 3, only by selecting the modification medium - dichroic mirrors - so as they let through the pump wave (KB) and the idler wave (AK) and reflect the signal wave (SB) sent to the amplifier input. Such embodiment of the invention can be practically useful in the case where it is desirable to efficiently generate radiation at a wavelength at which there are no convenient means for generating an initial signal wave (SB). Since the wavelengths of all the interacting waves - the pump wave $\lambda_{KB}$, the signal wave $\lambda_{SB}$ and the idler wave $\lambda_{AK}$ - are unambiguously related by the law of photon energy conservation:

$$\frac{1}{\lambda_{KB}} = \frac{1}{\lambda_{SB}} + \frac{1}{\lambda_{AK}}$$

, in most cases, a combination of wavelengths of the pump wave (KB) and the signal wave (SB) can be found as to generate the idler wave (AK) of the desired wavelength. Often, this embodiment of the invention will be relevant to generate light in the infrared range where laser sources are scarce.

Without limiting, but only as one of many possible examples, the following particular situation can be presented: let us say that it is desirable to efficiently generate radiation of $3\mu$m wavelength. Yb: KGW pump laser with radiation wavelength $\lambda_{KB}$ = 1.03$\mu$m is used for pump.

The required signal wavelength (SB) can then be calculated according to the following formula:

$$\lambda_{SB} = \frac{\lambda_{KB}\lambda_{AK}}{\lambda_{AK} - \lambda_{KB}}$$

In the given case, selecting $\lambda_{SB}$ = 1.57$\mu$m would result in $\lambda_{AK}$ = 3$\mu$m. The choice of radiation sources generating at $\lambda$ = 1.57$\mu$m is much larger than at $\lambda$ = 3$\mu$m - these could be Er ion doped fiber optic lasers, semiconductor lasers and parametric generators. Thus, after generating the radiation of the required wavelength in the first amplification means ($ST_{NK6.1}$), all the methods described in the invention can be further applied in order to increase efficiency of generating the desired radiation.

In all cases of the invention, not limited to specific versions of nonlinear crystals and auxiliary components, it is necessary to adapt the optical elements to the parameters of the laser radiation sources (pump and signal waves) used in a particular embodiment.

In all cases of the invention, the parametric amplification process is performed in several steps, between which it is ensured in one way or another that the idler wave generated in the previous step can no longer participate in the next step.

In all cases of the invention, the once-converted pulsed beam regions remain converted, and after the first amplification means, the subsequent amplification means further converts new parts of the pump pulsed beam without returning the signal wave energy to the pump wave.

In all embodiments of the invention, the non-listed optical and electronic components of the multistage parametric light amplifier are standard components of such devices and are therefore not included in the description, thus avoiding unnecessary complexity of the object of the invention.

It is also important to mention that for additional benefits or optimal device operation, the parametric light amplifier configuration may be combined by using modification methods described in several embodiments of the invention, where the methods are intended for modification of the idler wave, the signal wave and pump wave. Without limiting, as an example, it could be a version in which the first modification means would be a dichroic mirror reflecting an idler wave and the further modification means would be a birefringent crystal. The implementation of the invention in this way would provide additional advantages not obtained from individual embodiments of the invention: 1) the idler wave reflected from the dichroic mirror, which still consists of only one pulse and beam of good temporal and spatial quality, could be used in applications; 2) The birefringent crystal can precisely adjust the delay between the signal wave and the pump wave to ensure maximum efficiency of the parametric amplifier. This description of the invention deliberately does not attempt to show all possible embodiments of the invention in which different modifications are included between the amplifying means, as such combinations may be numerous, but it should be understood that configurations of parametric light amplifier created by combining parts of the embodiments of the invention described in detail are also objects of the invention.

Although the present description includes numerous characteristics and advantages of the invention together with structural details and features, the description is given as an example of the invention embodiment. There may be changes in the details, especially in the form, size and layout of materials without departing from the principles of the invention, in accordance with the widely understood definition of terms used in claims.


## Claims

1.   A multistage parametric light amplification method comprising passing a pump wave (KB) and a signal wave (SB) through a signal wave amplification means and separating an idler wave (AK) from propagation trajectory of the pump wave (KB) and the signal wave (SB) between successive wave amplification means, wherein after passing the pump wave (KB) and the signal wave (SB) through at least one signal amplification means ($ST_{NK1.1.}$, $ST_{NK1.2.}$, $ST_{MT2.1.}$, $ST_{NK3.1.}$, $ST_{NK3.2.}$, $ST_{NK4.1.}$, $ST_{OZ5.1.}$, $ST_{OZ5.2.}$, $ST_{NK6.1}$, $ST_{NK6.2}$), parameters of the pump wave (KB) and the signal wave (SB) or the generated idler wave (AK) are modified by at least one modification means ($MT_{DK1.1.}$, $MT_{DK1.2.}$, $ST_{MT2.2.}$, $MT_{DV3.1.}$, $MT_{DV3.2.}$, $MT_{DV4.1.}$, $MT_{DV4.2.}$, $MT_{5.1}$, $MT_{5.2.}$, $MT_{DK6.1}$, $MT_{DK6.2}$) **characterized in that** the method comprises passing a pump wave (KB) and a signal wave (SB) through at least two amplification means ($ST_{NK1.1.}$, $ST_{NK1.2.}$, $ST_{NK1.3.}$) of the signal wave (SB), wherein the at least two amplification means ($ST_{NK1.1.}$, $ST_{NK1.2.}$, $ST_{NK1.3.}$) are nonlinear crystals in which the signal wave (SB) is amplified, and an idler wave (AK) is produced,

     and **in that** at least one modification means ($MT_{DK1.1.}$, $MT_{DK1.2.}$), located between each subsequent amplification means ($ST_{NK1.1.}$, $ST_{NK1.2.}$, $ST_{NK1.3.}$), shifts in time the idler wave (AK) pulse so as to not overlap with either the signal or the pump pulse, where the signal wave would be under the non-depleted portion of the pump pulse, the idler wave (AK) being generated in the first amplification means ($ST_{NK1.1}$) of the at least two amplification means ($ST_{NK1.1.}$, $ST_{NK1.2.}$, $ST_{NK1.3.}$) with respect to the pulses in the signal wave (SB) and pump wave (KB), preventing it from further interacting with the signal wave (SB) and pump wave (KB) in the subsequent modification means ($ST_{NK1.2.}$, $ST_{NK1.3.}$), without substantially changing the propagation direction of the idler wave (AK) or converting its energy into heat, while maintaining temporal overlap between pump wave (KB) and signal wave (SB) to facilitate energy exchange between signal wave (SB) and pump wave (KB).

2.   A multistage parametric light amplification method according to claim 1, where the idler wave (AK) from the first or subsequent amplification medium ($ST_{NK1.1.}$, $ST_{NK1.2.}$, $ST_{MT2.1.}$, $ST_{NK3.1.}$, $ST_{NK3.2.}$, $ST_{NK4.1.}$, $ST_{OZ5.1.}$, $ST_{OZ5.2.}$, $ST_{NK6.1}$, $ST_{NK6.2}$) is being amplified as a signal wave in the subsequent amplification medium ($ST_{NK1.2.}$, $ST_{MT2.1.}$, $ST_{NK3.2}$, $ST_{OZ5.2.}$, $ST_{NK6.2}$) and the wave which was a signal wave (SB) in the first amplification medium is eliminated, delayed or otherwise modified by modification means ($MT_{DK1.1.}$, $MT_{DK1.2.}$, $ST_{MT2.2.}$, $MT_{DV3.1.}$, $MT_{DV3.2.}$, $MT_{DV4.1.}$, $MT_{DV4.2.}$, $MT_{5.1.}$, $MT_{5.2.}$, $MT_{DK6.1}$, $MT_{DK6.2}$).

3. A multistage parametric light amplification method according to claim 1 or 2, wherein the first amplification means is an optical area ($ST_{OZ5.1.}$) present in a nonlinear crystal ($ST_{NK5}$) having more than one optical area with different properties ($ST_{OZ5.1.}$, $ST_{OZ5.2.}$, $ST_{OZ5.3.}$, $MT_{5.1.}$, $MT_{5.2.}$) and the first modification means ($MT_{5.1.}$) behind the first amplification means ($ST_{OZ5.1.}$) is the optical area in the same nonlinear crystal ($ST_{NK5}$), whose optical properties differ from the optical area ($ST_{OZ5.1.}$) of the first amplification means.

4. A multistage parametric light amplifier comprising at least one signal wave (SB) amplification means,

at least one pump wave (KB) and the signal wave (SB) or idler wave (AK) modification means ($MT_{DK1.1.}$, $MT_{DK1.2.}$) **characterized in that** the multistage parametric light amplifier comprises at least two nonlinear crystals ($ST_{NK1.1.}$, $ST_{NK1.2.}$, $ST_{NK1.3.}$) with modification means ($MT_{DK1.1.}$, $MT_{DK1.2.}$) inserted between the crystals ($ST_{NK1.1.}$, $ST_{NK1.2.}$, $ST_{NK1.3.}$),
where the signal wave the parameters of the birefringent crystal (material, thickness and cut-off angle) are selected such, that after placing it behind the nonlinear crystal, the signal wave is under the non-depleted portion of the pump pulse and the idler wave pulse is shifted in time so as to not overlap with either the signal or the pump pulse
where the first amplification means is an optical area ($ST_{OZ5.1.}$) present in a nonlinear crystal ($ST_{NK5}$) having more than one optical area with different properties ($ST_{OZ5.1.}$, $ST_{OZ5.2.}$, $ST_{OZ5.3.}$, $MT_{5.1.}$, $MT_{5.2.}$) and the first modification means ($MT_{5.1.}$) behind the first amplification means ($ST_{OZ5.1.}$) is the optical area in the same nonlinear crystal ($ST_{NK5}$), whose optical properties differ from the optical area ($ST_{OZ5.1.}$) of the first amplification means.

5. A multistage parametric light amplifier according to claim 4, in which the modification means ($MT_{DK1.1.}$, $MT_{DK1.2.}$) are birefringent crystals.

6. A multistage parametric light amplifier according to claim 4, in which the amplification means are nonlinear crystals, such as $BaB_2O_4$, $LiB_3O_5$, $KTiOPO_4$, $KTiOAsO_4$, $LiNbO_3$, GaSe, or other materials exhibiting second-order optical nonlinearity.

7. A multistage parametric light amplifier according to claim 4, in which additional optical elements are interspersed between any amplification means ($ST_{NK1.1.}$, $ST_{NK1.2.}$, $ST_{NK1.3.}$) or modification means, performing any of the following functions: focusing, defocusing the beams of the interacting waves, with the intent of adjusting the intensity of the interacting waves between subsequent amplification means.

**Patentansprüche**

1. Mehrstufiges parametrisches Lichtverstärkungsverfahren umfassend Leiten einer Pumpwelle (KB) und einer Signalwelle (SB) durch ein Signalwellenverstärkungsmittel und Trennen einer Hilfswelle (AK) von einer Ausbreitungstrajektorie der Pumpwelle (KB) und der Signalwelle (SB) zwischen aufeinanderfolgenden Wellenverstärkungsmitteln, wobei nach dem Leiten der Pumpwelle (KB) und der Signalwelle (SB) durch mindestens ein Signalverstärkungsmittel ($ST_{NK1.1.}$, $ST_{NK1.2.}$, $ST_{MT2.1.}$, $ST_{NK3.1.}$, $ST_{NK3.2.}$, $ST_{NK4.1.}$, $ST_{oz5.1.}$, $ST_{OZ5.2.}$, $ST_{NK6.1}$, $ST_{NK6.2}$) Parameter der Pumpwelle (KB) und der Signalwelle (SB) oder der erzeugten Hilfswelle (AK) geändert werden durch mindestens ein Änderungsmittel ($MT_{DK1.1.}$, $MT_{DK1.2.}$, $ST_{MT2.2.}$, $MT_{DV3.1.}$, $MT_{DV3.2.}$, $MT_{DV4.1.}$, $MT_{DV4.2.}$, $MT_{5.1.}$, $MT_{5.2.}$, $MT_{DK6.1}$, $MT_{DK6.2}$), **dadurch gekennzeichnet, dass** das Verfahren Leiten einer Pumpwelle (KB) und einer Signalwelle (SB) durch mindestens zwei Verstärkungsmittel ($ST_{NK1.1.}$, $ST_{NK1.2.}$, $ST_{NK1.3.}$) der Signalwelle (SB) umfasst, wobei die mindestens zwei Verstärkungsmittel ($ST_{NK1.1.}$, $ST_{NK1.2.}$, $ST_{NK1.3.}$) nichtlineare Kristalle sind, in denen die Signalwelle (SB) verstärkt wird und eine Hilfswelle (AK) hergestellt wird, und dadurch, dass mindestens ein Änderungsmittel ($MT_{DK1.1.}$, $MT_{DK1.2.}$), das sich zwischen jedem nachfolgenden Verstärkungsmittel ($ST_{NK1.1.}$, $ST_{NK1.2.}$, $ST_{NK1.3.}$) befindet, den Impuls der Hilfswelle (AK) zeitlich derart verschiebt, dass er sich weder mit dem Signal noch mit dem Pumpimpuls überlappt, wobei die Signalwelle unter dem nicht verarmten Teil des Pumpimpulses liegen würde, wobei die Hilfswelle (AK) in dem ersten Verstärkungsmittel ($ST_{NK1.1}$) der mindestens zwei Verstärkungsmittel ($ST_{NK1.1.}$, $ST_{NK1.2}$, $ST_{NK1.3}$) in Hinblick auf die Impulse in der Signalwelle (SB) und der Pumpwelle (KB) erzeugt wird, wobei verhindert wird, dass sie in dem nachfolgenden Änderungsmittel ($ST_{NK1.2.}$, $ST_{NK1.3.}$) ferner mit der Signalwelle (SB) und der Pumpwelle (KB) interagiert, ohne die Ausbreitungsrichtung der Hilfswelle (AK) wesentlich zu ändern oder ihre Energie in Wärme umzuwandeln, unter Aufrechterhaltung einer zeitlichen Überlappung zwischen der Pumpwelle (KB) und der Signalwelle (SB), um einen Energieaustausch zwischen der Signalwelle (SB) und der Pumpwelle (KB) zu erleichtern.

2. Mehrstufiges parametrisches Lichtverstärkungsverfahren nach Anspruch 1, wobei die Hilfswelle (AK) durch das erste oder das nachfolgende Verstärkungsmedium ($ST_{NK1.1.}$, $ST_{NK1.2.}$, $ST_{MT2.1.}$, $ST_{NK3.1.}$, $ST_{NK3.2.}$, $ST_{NK4.1}$, $ST_{OZ5.1.}$, $ST_{OZ5.2.}$, $ST_{NK6.1}$, $ST_{NK6.2}$) als eine Signalwelle in dem nachfolgenden Verstärkungsmedium ($ST_{NK1.2.}$, $ST_{MT2.1.}$, $ST_{NK3.2.}$, $ST_{OZ5.2.}$, $ST_{NK6.2}$) verstärkt wird und die Welle, die in dem ersten Verstärkungsmedium eine Signalwelle (SB) war, gelöscht, verzögert oder anderweitig durch Änderungsmittel ($MT_{DK1.1.}$, $MT_{DK1.2.}$, $ST_{MT2.2.}$, $MT_{DV3.1.}$, $MT_{DV3.2.}$, $MT_{DV4.1.}$, $MT_{DV4.2.}$, $MT_{5.1.}$, $MT_{5.2.}$, $MT_{DK6.1}$, $MT_{DK6.2}$) geändert wird.

3. Mehrstufiges parametrisches Lichtverstärkungsverfahren nach Anspruch 1 oder 2, wobei das erste Verstärkungsmittel ein optischer Bereich ($ST_{oz5.1.}$) ist, der in einem nichtlinearen Kristall ($ST_{NK5}$) vorhanden ist, welcher mehr als einen optischen Bereich mit unterschiedlichen Eigenschaften ($ST_{oz5.1.}$, $ST_{OZ5.2.}$, $ST_{oz5.3.}$, $MT_{5.1.}$, $MT_{5.2.}$) hat und das erste Änderungsmittel ($MT_{5.1.}$) hinter dem ersten Verstärkungsmittel ($ST_{oz5.1.}$) der optische Bereich in demselben nichtlinearen Kristall ($ST_{NK5}$) ist, dessen optische Eigenschaften sich von dem optischen Bereich ($ST_{oz5.1.}$) des ersten Verstärkungsmittels unterscheiden.

4. Mehrstufiges parametrisches Lichtverstärkungsverfahren, umfassend mindestens ein Verstärkungsmittel für eine Signalwelle (SB), mindestens eine Pumpwelle (KB) und das Änderungsmittel ($MT_{DK1.1.}$, $MT_{DK1.2.}$) für die Signalwelle (SB) oder die Hilfswelle (AK), **dadurch gekennzeichnet, dass** der mehrstufige parametrische Lichtverstärker mindestens zwei nichtlineare Kristalle ($ST_{NK1.1.}$, $ST_{NK1.2.}$, $ST_{NK1.3.}$) mit Änderungsmitteln ($MT_{DK1.1.}$, $MT_{DK1.2.}$), die zwischen die Kristalle ($ST_{NK1.1.}$, $ST_{NK1.2.}$, $ST_{NK1.3.}$) eingesetzt sind, umfasst, wobei die Signalwelle die Parameter des doppelbrechenden Kristalls (Material, Dicke und Abschaltwinkel) derart gewählt sind, dass sich die Signalwelle nach ihrem Platzieren hinter dem nichtlinearen Kristall unter dem nicht verarmten Teil des Pumpimpulses befindet und der Hilfswellenimpuls zeitlich so verschoben ist, dass er sich weder mit dem Signal noch mit dem Pumpimpuls überlappt, wobei das erste Verstärkungsmittel ein optischer Bereich ($ST_{oz5.1.}$) ist, der in einem nichtlinearen Kristall ($ST_{NK5}$) vorhanden ist, welcher mehr als einen optischen Bereich mit unterschiedlichen Eigenschaften ($ST_{oz5.1.}$, $ST_{OZ5.2.}$, $ST_{oz5.3.}$, $MT_{5.1.}$, $MT_{5.2.}$) hat, und das erste Änderungsmittel ($MT_{5.1.}$) hinter dem ersten Verstärkungsmittel ($ST_{oz5.1.}$) der optische Bereich in demselben nichtlinearen Kristall ($ST_{NK5}$) ist, dessen optische Eigenschaften sich von dem optischen Bereich ($ST_{oz5.1.}$) des ersten Verstärkungsmittels unterscheiden.

5. Mehrstufiger parametrischer Lichtverstärker nach Anspruch 4, bei dem die Änderungsmittel ($MT_{DK1.1.}$, $MT_{DK1.2.}$) doppelbrechende Kristalle sind.

6. Mehrstufiger parametrischer Lichtverstärker nach Anspruch 4, bei dem die Verstärkungsmittel nichtlineare Kristalle wie zum Beispiel $BaB_2O_4$, $LiB_3O_5$, $KTiOPO_4$, $KTiOAsO_4$, $LiNbO_3$, GaSe oder andere Materialien sind, die optische Nichtlinearität zweiter Ordnung aufweisen.

7. Mehrstufiger parametrischer Lichtverstärker nach Anspruch 4, bei dem zusätzliche optische Elemente zwischen beliebigen Verstärkungsmitteln ($ST_{NK1.1.}$, $ST_{NK1.2.}$, $ST_{NK1.3.}$) oder Änderungsmitteln eingestreut sind, die eine beliebige der folgenden Funktionen durchführen: Fokussieren, Defokussieren der Strahlen der interagierenden Wellen mit der Absicht, die Intensität der interagierenden Wellen zwischen nachfolgenden Verstärkungsmitteln anzupassen.

## Revendications

1. Procédé d'amplification paramétrique de lumière à plusieurs étages comprenant le passage d'une onde de pompage (KB) et d'une onde de signal (SB) à travers un moyen d'amplification d'onde de signal et la séparation d'une onde libre (AK) de la trajectoire de propagation de l'onde de pompage (KB) et de l'onde de signal (SB) entre les moyens d'amplification d'ondes successifs, dans lequel après passage de l'onde de pompage (KB) et de l'onde de signal (SB) à travers au moins un moyen d'amplification de signal ($ST_{NK1.1}$, $ST_{NK1.2}$, $ST_{MT2.1}$, $ST_{NK3.1}$, $ST_{NK3.2}$, $ST_{NK4.1}$, $ST_{OZ5.1}$, $ST_{OZ5.2}$, $ST_{NK6.1}$, $ST_{NK6.2}$), les paramètres de l'onde de pompage (KB) et de l'onde de signal (SB) ou de l'onde libre générée (AK) sont modifiés par au moins un moyen de modification ($MT_{DK1.1}$, $MT_{DK1.2}$, $ST_{MT2.2}$, $MT_{DV3.1}$, $MT_{DV3.2}$, $MT_{DV4.1}$, $MT_{DV4.2}$, $MT_{5.1}$, $MT_{5.2}$, $MT_{DK6.1}$, $MT_{DK6.2}$) **caractérisé en ce que** le procédé comprend le passage d'une onde de pompe (KB) et d'une onde de signal (SB) à travers au moins deux moyens d'amplification ($ST_{NK1.1}$, $ST_{NK1.2}$, $ST_{NK1.3}$) de l'onde de signal (SB), les au moins deux moyens d'amplification ($ST_{NK1.1}$, $ST_{NK1.2}$, $ST_{NK1.3}$) étant des cristaux non linéaires dans lesquels l'onde de signal (SB) est amplifiée et une onde de repos (AK) est produite, et **en ce qu'**au moins un moyen de modification ($MT_{DK1.1,}$ $MT_{DK1.2}$), situé entre chaque moyen d'amplification suivant ($ST_{NK1.1}$, $ST_{NK1.2}$, $ST_{NK1.3}$), décale dans le temps l'impulsion d'onde de repos (AK) de manière à ne pas chevaucher le signal ou l'impulsion de pompe, où l'onde de signal serait sous la partie non appauvrie de l'impulsion de pompe, l'onde de repos (AK) étant générée dans le premier moyen d'amplification ($ST_{NK1.1}$) des au moins deux moyens d'amplification ($ST_{NK1.1}$, $ST_{NK1.2}$, $ST_{NK1.3}$) par rapport aux impulsions de l'onde de signal (SB) et de l'onde de pompe (KB), l'empêchant d'interagir davantage avec l'onde de signal (SB) et l'onde de pompe (KB) dans les moyens de modification ultérieurs ($ST_{NK1.2}$, $ST_{NK1.3}$), sans modifier sensiblement la direction de propagation de l'onde de repos (AK) ou convertir son énergie en chaleur, tout en maintenant un chevauchement temporel entre l'onde de pompe (KB) et l'onde de signal (SB) pour faciliter l'échange d'énergie entre l'onde de signal (SB) et l'onde de pompe (KB).

2. Procédé d'amplification paramétrique de lumière à plusieurs étages selon la revendication 1, dans lequel l'onde de repos (AK) provenant du premier milieu d'amplification ou des milieux d'amplification suivants ($ST_{NK1.1.}$, $ST_{NK1.2.}$, $ST_{MT2.1.}$, $ST_{NK3.1.}$, $ST_{NK3.2.}$, $ST_{NK4.1.}$, $ST_{OZ5.1.}$, $ST_{OZ5.2.}$, $ST_{NK6.1}$, $ST_{NK6.2}$) est amplifiée comme onde de signal dans le milieu d'amplification suivant ($ST_{NK1.2}$, $ST_{MT2.1.}$, $ST_{NK3.2.}$, $ST_{OZ5.2}$, $ST_{NK6.2}$) et l'onde qui était une onde de signal (SB) dans le premier milieu d'amplification est éliminée, retardée ou autrement modifiée par des moyens de modification ($MT_{DK1.1.}$, $MT_{DK1.2.}$, $ST_{MT2.2.}$, $MT_{DV3.1}$, $MT_{DV3.2.}$, $MT_{DV4.1}$, $MT_{DV4.2}$, $MT_{5.1}$, $MT_{5.2}$, $MT_{DK6.1}$, $MT_{DK6.2}$).

3. Procédé d'amplification de lumière paramétrique à plusieurs étages selon la revendication 1 ou 2, dans lequel le premier moyen d'amplification est une zone optique ($ST_{OZ5.1.}$) présente dans un cristal non linéaire ($ST_{NK5}$) ayant plus d'une zone optique avec des propriétés différentes ($ST_{OZ5.1.}$, $ST_{OZ5.2.}$, $ST_{OZ5.3.}$, $MT_{5.1.}$, $MT_{5.2.}$) et le premier moyen de modification ($MT_{5.1.}$) derrière le premier moyen d'amplification ($ST_{OZ5.1.}$) est la zone optique dans le même cristal non linéaire ($ST_{NK5}$), dont les propriétés optiques diffèrent de la zone optique ($ST_{OZ5.1.}$) du premier moyen d'amplification.

4. Amplificateur de lumière paramétrique à plusieurs étages comprenant au moins un moyen d'amplification d'onde de signal (SB), au moins une onde de pompage (KB) et un moyen de modification de l'onde de signal (SB) ou de l'onde de repos (AK) ($MT_{DK1.1.}$, $MT_{DK1.2.}$), **caractérisé en ce que** l'amplificateur de lumière paramétrique à plusieurs étages comprend au moins deux cristaux non linéaires ($ST_{NK1.1.}$, $ST_{NK1.2.}$, $ST_{NK1.3.}$) avec un moyen de modification ($MT_{DK1.1}$, $MT_{DK1.2.}$) inséré entre les cristaux ($ST_{NK1.1.}$, $ST_{NK1.2.}$, $ST_{NK1.3.}$), où l'onde de signal, les paramètres du cristal biréfringent (matériau, épaisseur et angle de coupure) sont choisis de telle sorte qu'après son placement derrière le cristal non linéaire, l'onde de signal se trouve sous la partie non appauvrie de l'impulsion de pompage et l'impulsion de l'onde de repos est décalée dans le temps de manière à ne chevaucher ni le signal ni l'impulsion de pompage où le premier moyen d'amplification est une zone optique ($ST_{OZ5.1.}$) présente dans un cristal non linéaire ($ST_{NK5}$) ayant plus d'une zone optique avec des propriétés différentes ($ST_{OZ5.1.}$, $ST_{OZ5.2.}$, $ST_{OZ5.3.}$, $MT_{5.1}$, $MT_{5.2.}$) et le premier moyen de modification ($MT_{5.1.}$) derrière le premier moyen d'amplification ($ST_{OZ5.1.}$) est la zone optique dans le même cristal non linéaire ($ST_{NK5}$), dont les propriétés optiques diffèrent de la zone optique ($ST_{OZ5.1.}$) du premier moyen d'amplification.

5. Amplificateur de lumière paramétrique à plusieurs étages selon la revendication 4, dans lequel les moyens de modification ($MT_{DK1.1.}$, $MT_{DK1.2.}$) sont des cristaux biréfringents.

6. Amplificateur de lumière paramétrique à plusieurs étages selon la revendication 4, dans lequel les moyens d'amplification sont des cristaux non linéaires, tels que $BaB_2O_4$, $LiB_3O_5$, $KTiOPO_4$, $KTiOAsO_4$, $LiNbO_3$, GaSe, ou d'autres matériaux présentant une non-linéarité optique du second ordre.

7. Amplificateur de lumière paramétrique à plusieurs étages selon la revendication 4, dans lequel des éléments optiques supplémentaires sont intercalés entre des moyens d'amplification ($ST_{NK1.1.}$, $ST_{NK1.2.}$, $ST_{NK1.3.}$) ou des moyens de modification, exécutant l'une quelconque des fonctions suivantes : la focalisation, la défocalisation des faisceaux des ondes en interaction, dans le but d'ajuster l'intensité des ondes en interaction entre des moyens d'amplification ultérieurs.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 340688
- US 20160026066 A1
- EP 11150701
- EP 2346122 A2
- EP 14466004
- EP 2899816 A1

### Non-patent literature cited in the description

- **YING LI ; HAIZHE ZHONG ; JIANLONG YANG ; SHIWEI WANG ; DIANYUAN FAN**. Versatile back-conversion-inhibited broadband optical parametric amplification based on an idler-separated QPM configuration. *Optics Letters*, 2017, vol. 42 (14), 2806-2809
- **WENQI LI ; CHUN PENG ; LU XU ; LIANGHONG YU ; XIAOYAN LIANG**. *Optimizing the performance of non-collinear optical parametric chirped pulse amplification via multi-pass structure based on two geometry configurations*
- **JINGUI MA ; JING WANG ; PENG YUAN ; GUO-QIANG XIE ; KAINAN XIONG ; YIFAN TU ; XIAONIU TU ; ERWEI SHI ; YANQING ZHENG ; LIEJIA QIAN**. Quasi-parametric amplification of chirped pulses based on a Sm3+-doped yttrium calcium oxyborate crystal. *Optica*, 2015, vol. 2 (11), 1006-1009
- **JINGUI MA ; JING WANG ; BINGJIE ZHOU ; PENG YUAN ; GUOQIANG XIE ; KAINAN XIONG ; YANQING ZHENG ; HEYUAN ZHU ; LIEJIA QIAN**. Broadband, efficient, and robust quasi-parametric chirped-pulse amplification. *Optics Express*, 2017, vol. 25 (21), 25149-25164